# EUROPÄISCHE PATENTSCHRIFT

(11) **EP 3 931 575 B1**
(45) Veröffentlichungstag und Bekanntmachung des Hinweises auf die Patenterteilung: **21.08.2024**
(21) Anmeldenummer: 20707066.5
(22) Anmeldetag: 24.02.2020
(51) Int. Cl.: G01N 35/10, B01L 3/02, G01N 35/00, G01N 35/02, G01N 35/04

(54) **PIPETTIERVORRICHTUNG MIT DRAHTLOS GEKOPPELTEM IM ARBEITSRAUM DER VORRICHTUNG VERLAGERBAREM SENSOR**
PIPETTING DEVICE WITH WIRELESSLY COUPLED SENSOR POSITIONABLE IN THE WORKPLACE OF THE DEVICE
DISPOSITIF DE PIPETAGE AVEC UN CAPTEUR COUPLÉ SANS FIL POSITIONNABLE SUR LE LIEU DE TRAVAIL DU DISPOSITIF

(30) Priorität: 26.02.2019 DE 102019104878
(43) Veröffentlichungstag der Anmeldung: 05.01.2022
(73) Patentinhaber: Hamilton Bonaduz AG, 7402 Bonaduz (CH)
(72) Erfinder: WENK, Jonas, 7141 Luven (CH); PFENNINGER, Patrick, 8712 Stäfa (CH)
(74) Vertreter: Ruttensperger Lachnit Trossin Gomoll
(86) Internationale Anmeldenummer: PCT/EP2020/054756
(87) Internationale Veröffentlichungsnummer: WO 2020/173867

(56) Entgegenhaltungen:
- US-A1- 2014 296 089
- US-A1- 2017 045 542

## Beschreibung

Die vorliegende Erfindung betrifft eine Pipettiervorrichtung gemäß dem Oberbegriff des Anspruchs 1.

Derartige Pipettiervorrichtungen sind aus der US 2014/0296089 A1 oder aus der US 2017/0045542 A1 bekannt. Sie dienen dazu, mit einem oder mehreren Pipettierkanälen Dosierflüssigkeiten aufzunehmen und wieder abzugeben. Zunächst aspirierte Dosierflüssigkeit kann in dem wenigstens einen Pipettierkanal von einem Ort zu einem anderen bewegt werden, wo die aspirierte Dosierflüssigkeit dann dispensiert werden kann. Das Labormaterial kann deshalb wenigstens ein Gefäß umfassen, in welchem Dosierflüssigkeit aufgenommen sein kann bzw. in welches Dosierflüssigkeit abgegeben werden kann. Weitverbreitetes derartiges Labormaterial sind Gefäßplatten, beispielsweise in Gestalt von Mikrotiterplatten oder Deep-Well-Platten, welche rasterartig Vertiefungen, die als Gefäße dienen, in ihrer von der Arbeitsfläche weg weisenden Öffnungsfläche aufweisen.

Die Arbeitsfläche im Sinne der vorliegenden Erfindung ist nicht notwendigerweise eine ebene Fläche und ist nicht notwendigerweise eine Oberfläche eines monolithischen Abstellkörpers. Die Arbeitsfläche einer Pipettiervorrichtung im Sinne der vorliegenden Erfindung ist lediglich jene Fläche, auf welcher Labormaterial, das an einem Arbeitsvorgang der Pipettiervorrichtung teilnimmt, während des wenigstens einen Arbeitsvorgangs ruht, gegebenenfalls unter Zwischenanordnung weiteren Labormaterials, wie etwa Träger. Die Arbeitsfläche der vorliegenden Erfindung kann zumindest abschnittsweise durch Transportmittel gebildet sein, wie beispielsweise durch wenigstens ein Transportband, mit welchem Labormaterial in den Arbeitsraum der Pipettiervorrichtung hinein und aus diesem heraus transportierbar ist.

Der Arbeitsraum der Pipettiervorrichtung ist dabei der über der Arbeitsfläche von wenigstens einem Pipettierkanal oder einer Greifervorrichtung der Pipettiervorrichtung erreichbare Raum, wobei für die Beurteilung der Erreichbarkeit durch einen Pipettierkanal eine Pipettieröffnung herangezogen werden soll, durch welche hindurch ein Pipettierkanal Dosierflüssigkeit aufnimmt und wieder abgibt. Die Pipettieröffnung kann an einer nur vorübergehend mit dem Pipettierkanal lösbar gekoppelten Pipettierspitze ausgebildet sein. Der Einfachheit halber soll angenommen sein, dass der Arbeitsraum der Pipettiervorrichtung in Richtung orthogonal zu Arbeitsfläche bis zur Arbeitsfläche reicht, selbst wenn im Einzelfall die Pipettieröffnung eines Pipettierkanals oder eine Greiferanordnung einer Greifervorrichtung unter Umständen nicht bis zur Arbeitsfläche abgesenkt werden kann.

Die von einer Pipettiervorrichtung verarbeiteten Dosierflüssigkeiten sind unterschiedlichster Art. Dabei können Dosierflüssigkeiten aufgrund ihrer physikalischen oder/und chemischen Konstitution gegenüber äußeren Einflüssen hochsensibel sein, etwa aufgrund von Temperaturempfindlichkeit oder/und aufgrund von Empfindlichkeit gegenüber Feuchtigkeit oder/und aufgrund starker Oxidationsneigung empfindlich gegenüber der Anwesenheit von Sauerstoff und dergleichen.

Durch den Betrieb der Pipettiervorrichtung entsteht abhängig von der Betriebsart und der Betriebsdauer lokal Wärme, etwa durch Reibung in Gelenken und in Antrieben sowie durch unvermeidliche Verlustleistung in den Antrieben. Außerdem schwanken auch in Laboren die Raumtemperaturen jahreszeitlich. Gleiches gilt für die Feuchtigkeit der Raumluft im Labor, die außer von der Jahreszeit auch stark von den jeweiligen meteorologischen Verhältnissen abhängig sein kann. Nicht jedes Labor ist eine vollklimatisierte Zelle, bei der aufwändige Klimaanlagen für eine möglichst konstante Temperatur und Atmosphärenfeuchtigkeit sorgen.

Manche Pipettiervorrichtungen weisen an ihren Vorrichtungsteilen befestigt einen oder mehrere Sensoren auf, um eine physikalische Größe zu erfassen, die für den Betrieb der Pipettiervorrichtung von Bedeutung ist. In vielen Fällen ist diese physikalische Größe die Temperatur. Damit kann zwar eine gewisse räumliche Verteilung von Werten der physikalischen Größe ermittelt werden, jedoch immer nur an denselben Orten, nämlich an jenen Orten der Vorrichtungsteile der Pipettiervorrichtung, an welchen der jeweilige Sensor angebracht ist. Diese Orte können aufgrund ihrer festen Anbringung an Vorrichtungsteilen unerwünscht weit von jenen auf und über der Arbeitsfläche entfernt liegen, an welchen der Wert der physikalischen Größe aufgrund des dort ablaufenden Arbeitsvorgangs tatsächlich interessiert. Darüber hinaus erfordert jeder Messort einen eigenen Sensor.

Zusätzlich oder alternativ kann wenigstens eine physikalische Größe an mehreren Orten manuell und sequentiell durch eine Sensorvorrichtung erfasst werden. Dieser Vorgang ist aufgrund der menschlichen Natur selbst bei größter Sorgfalt nur bedingt wiederholgenau. Außerdem ist die manuelle Erfassung physikalischer Größen und deren anschließende Eingabe in die elektronische Datenverarbeitungsvorrichtung in Zuordnung zum jeweiligen Messort langwierig und unterbricht somit die tatsächlich von der Pipettiervorrichtung erwarteten Arbeitsabläufe erheblich. Manuelle Erfassungsvorgänge sind daher sehr nachteilig für die Produktivität einer Pipettiervorrichtung.

Der vorliegenden Erfindung liegt daher die Aufgabe zugrunde, die eingangs genannte Pipettiervorrichtung derart weiterzubilden, dass sie mit hoher Produktivität in herkömmlichen nicht oder nur bedingt klimatisierten Laborräumen auch sensible Dosierflüssigkeiten sicher verarbeiten kann.

Diese Aufgabe löst die vorliegende Erfindung durch eine Pipettiervorrichtung mit allen Merkmalen des Anspruchs 1. Die Sensorvorrichtung weist einen Sender auf, welcher dazu ausgebildet ist, Signale von der Sensorvorrichtung drahtlos zur elektronischen Datenverarbeitungsvorrichtung zu übertragen, und bei welcher weiter die elektronische Datenverarbeitungsvorrichtung einen Empfänger aufweist, welcher dazu ausgebildet ist, Signale von der Sensorvorrichtung drahtlos zu empfangen.

Dadurch kann ein Erfassungsergebnis der Sensorvorrichtung unmittelbar zur Datenverarbeitungsvorrichtung übertragen und von dieser verarbeitet werden. Die Sensorvorrichtung kann daher relativ zur Pipettiervorrichtung eine hohe Mobilität aufweisen, wobei dennoch schnell ein erfasster Messwert zur Datenverarbeitungsvorrichtung gleichsam unmittelbar nach seiner Erfassung zur Datenverarbeitungsvorrichtung gelangt.

Zwar erleichtert die drahtlose Datenübertragung die Eingabe der erfassten Messwerte in die elektronische Datenverarbeitung. Eine schnelle Verlagerung der Sensorvorrichtung bei gleichzeitig hoher Positioniergenauigkeit wird erfindungsgemäß dadurch erhalten, dass die Pipettiervorrichtung wenigstens eine Greifervorrichtung umfasst, welche im Arbeitsraum sowohl parallel zur Arbeitsfläche beweglich ist, als auch an die Arbeitsfläche annäherbar und von dieser entfernbar ist, wobei die Sensorvorrichtung eine von der Greifervorrichtung lösbar greifbare Greifformation aufweist, sodass die Sensorvorrichtung durch die Greifervorrichtung zwischen wenigstens zwei Orten auf der Arbeitsfläche verlagerbar ist.

Die Greifformation kann ein gesondert ausgebildeter Vorsprung oder eine gesondert ausgebildete Flächenformation, wie beispielsweise Eingriffsnuten, in welche mechanische Greifarme der Greifervorrichtung formschlüssig eingreifen können, an einer äußeren Hülle der Sensorvorrichtung sein. Die Greifformation kann zusätzlich oder alternativ durch einen nach Maßgabe einer Norm oder Standardisierungsvorschrift ausgebildeten Gehäuseabschnitt der Sensorvorrichtung gebildet sein. Auf die vorteilhafte Ausbildung eines Gehäuseabschnitt, insbesondere eines Fußbereichs, der Sensorvorrichtung gemäß einer für Labormaterial bestehenden Normen, wie etwa der ANSI SLAS 1-2004, wird weiter unten noch im Detail eingegangen.

Die Greifervorrichtung kann mit einem eigenen Antrieb gesondert von dem wenigstens einen Pipettierkanal an der Pipettiervorrichtung vorgesehen sein. Zusätzlich oder alternativ dazu kann die Greifervorrichtung eine an eine Kopplungsformation eines Pipettierkanals ankoppelbare Greifervorrichtung sein. Die Ankoppelbarkeit kann der Ankopplung von Einweg-Pipettierspitzen an einen Pipettierkanal entsprechen, sodass die Greifervorrichtung, angekoppelt an dem Pipettierkanal, von diesem im Arbeitsraum über der Arbeitsfläche bewegt werden kann. Durch Veränderung eines Drucks eines Arbeitsgases im Pipettierkanal kann die an den Pipettierkanal angekoppelte Greifervorrichtung zum Öffnen und Schließen ihrer Greiferarme angetrieben werden. Eine Greifervorrichtung kann auch durch mehr als einen Pipettierkanal aufgenommen, bewegt und betätigt werden.

Um nicht nur eine Übertragung von Signalen, etwa von erfassten Daten der wenigstens einen physikalischen Größe, von der Sensorvorrichtung zur elektronischen Datenverarbeitungsvorrichtung zu ermöglichen, sondern um etwa die Steuerung des Betriebs der Sensorvorrichtung zumindest abschnittsweise durch die elektronische Datenverarbeitungsvorrichtung zu ermöglichen, ist gemäß einer vorteilhaften Weiterbildung der vorliegenden Erfindung vorgesehen, dass sowohl der Sender der Sensorvorrichtung als auch der Empfänger der elektronischen Datenverarbeitungsvorrichtung jeweils zur bidirektionalen Signalübertragung ausgebildete Sende-/Empfangseinrichtungen sind, so dass Signale bidirektional drahtlos zwischen der Sensorvorrichtung und der elektronischen Datenverarbeitungsvorrichtung übertragbar sind.

So kann die elektronische Datenverarbeitungsvorrichtung einen Erfassungsvorgang der Sensorvorrichtung zur Erfassung der wenigstens einen physikalischen Größe auslösen. Beispielsweise kann die elektronische Datenverarbeitungsvorrichtung dazu ausgebildet sein, dann, wenn der von der Sensorvorrichtung an sie übertragene Erfassungswert der wenigstens einen physikalischen Größe um einen vorbestimmten Betrag von einem Erfassungswert aufgrund zuvor erfolgter Messungen oder aufgrund eines hinterlegten Werte-Kennfelds abweicht und somit ein Erfassungsfehler vorliegen kann, einen erneuten Erfassungsvorgang an der Sensorvorrichtung auszulösen.

Um sicherstellen zu können, dass die Sensorvorrichtung inmitten anderen Labormaterials, beispielsweise von Trägern und Rahmen, welche Einweg-Pipettierspitzen bereitstellen oder Gefäßplatten, wie Mikrotiterplatten oder/und Deep-Well-Platten, tragen, verwendet und im Rahmen des verfügbaren, durch anderes Labormaterial noch nicht belegten Raumes frei angeordnet werden können, ist gemäß einer bevorzugten Weiterbildung der vorliegenden Erfindung daran gedacht, dass die Sensorvorrichtung ein Gehäuse aufweist, dessen abstellbarer Fußbereich einen für Labormaterial standardisierten Normflächenbereich einnimmt. Ein solcher Normflächenbereich ist beispielsweise für Mikrotiterplatten in der Norm ANSI SLAS 1-2014 definiert, welche zuvor auch als ANSI/SBS 1-2004 bekannt war. Gemäß dieser Norm weist der Fußbereich des Gehäuses der Sensorvorrichtung eine rechteckige Fläche auf, mit einer Länge von 127,76 mm und mit einer Breite von 85,48 mm, wobei sowohl Länge als auch Breite normgemäß toleriert sind und im Rahmen der in der Norm angegebenen Toleranz von den angegebenen Werten für Länge und Breite abweichen dürfen. Bevorzugt entspricht das gesamte Gehäuse der Sensorvorrichtung der angegebenen Abmessung.

Eine normgerechte bzw. normgemäße Abmessung der Sensorvorrichtung insgesamt stellt außerdem sicher, dass die Greifervorrichtung die Sensorvorrichtung greifen und im Arbeitsraum verlagern kann. Denn die Greifervorrichtung ist in der Regel dazu ausgebildet, Labormaterial mit eben jener normgemäßen Abmessung zu greifen.

Grundsätzlich gilt, dass die Dimensionierung des Fußbereichs des Gehäuses der Sensorvorrichtung, vorzugsweise der gesamten Sensorvorrichtung, jener Norm folgen sollte, welche abmessungsbestimmend für das übrige an der Pipettiervorrichtung verwendete Labormaterial ist. Bevorzugt weist die Sensorvorrichtung insgesamt Abmessungen auf, die den Abmessungen einer standardisierten Gefäßplatte, insbesondere Mikrotiterplatte, entsprechen.

Eine Sensorvorrichtung kann dabei dann mit einem von einer Norm vorgegebenen Abmessungsmaß bereitgestellt werden, wenn die Sensorvorrichtung in einem Trägerrahmen aufgenommen ist. Der Trägerrahmen kann dann gemäß der jeweiligen Norm ausgestaltet sein, während die eigentliche Sensoreinheit stets mit derselben Abmessung ohne Rücksicht auf die spätere Abmessung im Betrieb der Pipettiervorrichtung beschafft werden kann. Bevorzugt ist die Sensoreinheit lösbar in dem Trägerrahmen aufgenommen, sodass sie im Schadensfall ausgetauscht werden kann oder sodass sie auf unterschiedliche Normmaße durch Auswechseln des Trägerrahmens angepasst werden kann. Beispielsweise kann die Sensoreinheit ein eigenes Sensorgehäuse aufweisen, welches an dem Trägerrahmen festlegbar, insbesondere formschlüssig verrastbar ist.

Bevorzugt ist der Trägerrahmen ein schalenförmiges Bauteil, sodass es stapelbar ist. Ein Trägerrahmen kann mit anderen Trägerrahmen übereinander gestapelt werden oder er kann mit Labormaterial gestapelt werden, insbesondere mit Mikrotiterplatten oder mit sogenannten Deep-Well-Platten, die in der eingenommenen Grundfläche mit Mikrotiterplatten identisch sind, jedoch in Höhenrichtung eine größere Abmessung aufweisen als Mikrotiterplatten. Durch Stapelung eines Trägerrahmens mit darin aufgenommenem gesonderten Sensorgehäuse mit einer Mikrotiterplatte oder einer Deep-Well-Platte, also allgemein mit einer zur Aufnahme von Flüssigkeit geeigneten Gefäßplatte, kann eine physikalische Größe unmittelbar über der Gefäßplatte und damit über der darin aufgenommenen Flüssigkeit erfasst werden.

Die Sensorvorrichtung, die mit Ausnahme eines Anlageeingriffs dann, wenn sie auf der Arbeitsfläche aufsteht, bevorzugt keinerlei körperliche Verbindung mit der übrigen Pipettiervorrichtung aufweist, benötigt für die drahtlose Übermittlung von Signalen und ebenso für deren Empfang elektrische Energie. Hierzu kann in der Sensorvorrichtung eine Batterie vorgesehen sein. Um einen aufwändigen Austausch von Batterien außerhalb der Pipettiervorrichtung zu vermeiden, kann eine bevorzugte Weiterbildung der Sensorvorrichtung einen aufladbaren elektrischen Energiespeicher aufweisen. Die Arbeitsfläche kann einen Ladebereich aufweisen, sodass der elektrische Energiespeicher dann aufgeladen wird, wenn sich die Sensorvorrichtung im Ladebereich der Arbeitsfläche befindet. So kann durch die bloße Verbringung der Sensorvorrichtung in den Ladebereich mittels der Greifervorrichtung deren elektrischer Energiespeicher aufgeladen werden.

Das Aufladen kann dadurch erfolgen, dass im Ladebereich elektrische Kontakte auf Seiten der Sensorvorrichtung einerseits und auf Seiten der Pipettiervorrichtung andererseits in Berührkontakt miteinander gebracht werden. Einfacher und unter Vermeidung einer Berührung auch hygienischer ist es jedoch, wenn der elektrische Energiespeicher der Sensorvorrichtung im Ladebereich berührungslos, etwa durch induktive Kopplung mit einer Ladevorrichtung, aufladbar ist.

Wenngleich die Sensorvorrichtung grundsätzlich zur Erfassung einer oder mehrerer beliebiger physikalischer Größen ausgebildet sein kann, spielt eine thermische Erfassung einer lokalen Betriebssituation im Arbeitsraum des wenigstens einen Pipettierkanals in der Praxis wahrscheinlich die größte Rolle. Eng zusammenhängend mit der thermischen Betriebssituation ist die meteorologische Betriebssituation am Erfassungsort. Bevorzugt weist daher die Sensorvorrichtung wenigstens ein thermisches Sensorelement zur Erfassung einer Temperatur oder/und wenigstens einen Gasfeuchtigkeitssensor zur Erfassung eines Feuchtegehalts der die Sensorvorrichtung lokal umgebenden Atmosphäre oder/und einen Drucksensor zur Erfassung eines Drucks der die Sensorvorrichtung lokal umgebenden Atmosphäre auf. Der Gasfeuchtigkeitssensor, welcher in den meisten Fällen ein Luftfeuchtigkeitssensor sein wird, kann die relative Feuchtigkeit oder/und die absolute Feuchtigkeit des jeweils vorhandenen Gases messen.

Die oben genannte elektronische Datenverarbeitungsvorrichtung kann eine Steuervorrichtung umfassen, welche dazu ausgebildet ist, Bewegungsabläufe und Funktionsabläufe der Pipettiervorrichtung zu steuern. Hierzu kann die Steuervorrichtung insbesondere dazu ausgebildet sein, Antriebe der Pipettiervorrichtung anzusteuern oder/und Funktionsbaugruppen mit Energie zu versorgen oder deren Energieversorgung zu unterbrechen. Ebenso kann sie dazu ausgebildet sein, Erfassungsvorgänge der Sensorvorrichtung auszulösen. Bevorzugt ist die Steuervorrichtung im Zusammenhang mit der Sensorvorrichtung dazu ausgebildet, durch Verlagern der Sensorvorrichtung an eine Mehrzahl von Orten im Arbeitsraum wenigstens eine physikalische Größe an der Mehrzahl von Orten im Arbeitsraum zu erfassen und zu speichern. Hierzu kann die Steuervorrichtung sowohl die Greifervorrichtung als auch die Sensorvorrichtung entsprechend betreiben.

Dementsprechend betrifft die vorliegende Erfindung auch ein Betriebsverfahren zur Durchführung eines Messverfahrens an einer Pipettiervorrichtung, welche wie oben beschrieben ausgebildet ist und eine Greifervorrichtung aufweist. Das Betriebsverfahren umfasst die folgenden Verfahrensschritte:
- Verlagern der Sensorvorrichtung an eine Mehrzahl von Orten im Arbeitsraum der Pipettiervorrichtung mittels der Greifervorrichtung der Pipettiervorrichtung,
- Erfassen von wenigstens einer physikalischen Größe an jedem aus der Mehrzahl von Orten im Arbeitsraum,
- drahtloses Übertragen von Signalen zwischen der Sensorvorrichtung und der elektronischen Datenverarbeitungsvorrichtung, und
- Speichern der wenigstens einen erfassten physikalischen Größe in Zuordnung zu ihrem Erfassungsort.

In der vorliegenden Anmeldung beschriebene Weiterbildungen der Pipettiervorrichtung sind auch Weiterbildungen des Betriebsverfahrens und umgekehrt. Dementsprechend umfasst der Schritt des drahtlosen Übertragens von Signalen wenigstens eine Übertragung von Erfassungsergebnisse repräsentierenden Signalen von der Sensorvorrichtung an die elektronische Datenverarbeitungsvorrichtung. Bevorzugt kann dieser Schritt auch eine Übertragung von Steuerbefehlen von der elektronischen Datenverarbeitungsvorrichtung zur Sensorvorrichtung umfassen.

In der Regel ist der Pipettiervorrichtung bekannt, welche Dosierflüssigkeit von ihr gerade verarbeitet wird. Die Art der Dosierflüssigkeit bestimmt beispielsweise die Pipettierparameter der Aspiration oder/und der Dispensation Dosierflüssigkeit. Dabei kann es ausreichen, die Dosierflüssigkeit in eine von mehreren Flüssigkeitsklassen einzuordnen. Daher ist es bevorzugt, wenn die Pipettiervorrichtung eine Identifikationseinrichtung zur Identifikation einer durch die Pipettiervorrichtung zu verarbeitenden Dosierflüssigkeit aufweist. Diese Identifikationseinrichtung kann eine manuelle Eingabevorrichtung sein, mit welcher eine Bedienperson die Dosierflüssigkeit für die Pipettiervorrichtung ausreichend identifiziert. Zusätzlich oder alternativ kann die Identifikationseinrichtung eine Datenübertragungseinrichtung sein, über welche der Pipettiervorrichtung Daten übermittelt werden, welche die zu verarbeitende Dosierflüssig keit ausreichend identifizieren. Zusätzlich oder alternativ kann die Identifikationseinrichtung eine Code-Leseeinrichtung sein, wie etwa ein Barcode-Scanner oder dergleichen, mittels welcher die Pipettiervorrichtung die zu verarbeitende Dosierflüssigkeit an einer die Dosierflüssigkeit bereitstellenden Ausführungsform von Labormaterial ausreichend identifizieren kann, weil die die Dosierflüssigkeit bereitstellende Ausführungsform von Labormaterial einen entsprechenden Code trägt, der die Dosierflüssigkeit ausreichend identifiziert. Wie oben bereits dargelegt wurde, kann eine ausreichende Identifizierung bereits dann gegeben sein, wenn die Dosierflüssigkeit in eine von mehreren Flüssigkeitsklassen eingeordnet werden kann. Wann eine Identifizierung ausreichend ist, hängt von den Arbeitsvorgängen ab, die die Pipettiervorrichtung mit der Dosierflüssigkeit ausführt, oder/und von der Sensibilität der Dosierflüssigkeit gegen einen oder mehrere äußere Einflüsse.

Für die Weiterbildung des Betriebsverfahrens bedeutet dies, dass das Betriebsverfahren den folgenden weiteren Verfahrensschritt umfassen kann:
- Identifizieren einer durch die Pipettiervorrichtung zu verarbeitenden Flüssigkeit.

Um besonders bei sensiblen Dosierflüssigkeiten eine nachteilige Beeinträchtigung der Dosierflüssigkeit zu vermeiden, kann die Steuervorrichtung dazu ausgebildet sein, abhängig von der Identifikation der Dosierflüssigkeit und abhängig von der wenigstens einen an der Mehrzahl von Orten im Arbeitsraum erfassten physikalischen Größe einen bevorzugten Aufbewahrungsort der identifizierten Flüssigkeit im Arbeitsraum zu ermitteln und den ermittelten Aufbewahrungsort durch eine Ausgabevorrichtung an eine Bedienperson auszugeben oder/und die Flüssigkeit an den bevorzugten Anbringungsort zu verbringen.

Das Betriebsverfahren kann deshalb gemäß einer vorteilhaften Weiterbildung folgende zusätzliche Schritte aufweisen:
- Ermitteln eines bevorzugten Aufbewahrungsorts der identifizierten Flüssigkeit im Arbeitsraum der Pipettiervorrichtung in Abhängigkeit von dem Ergebnis der Identifikation der Flüssigkeit und in Abhängigkeit von der wenigstens einen an der Mehrzahl von Orten im Arbeitsraum der Pipettiervorrichtung erfassten physikalischen Größe, sowie dann
   a) Ausgeben des ermittelten Aufbewahrungsorts durch eine Ausgabevorrichtung an eine Bedienperson
      oder/und
   b) Verbringen der Flüssigkeit an den bevorzugten Anbringungsort.

Ebenso kann die Steuervorrichtung dazu ausgebildet sein, abhängig von der Identifikation der Flüssigkeit und abhängig von der wenigstens einen an der Mehrzahl von Orten im Arbeitsraum erfassten physikalischen Größe einen Warnhinweis an eine Bedienperson auszugeben, falls die physikalische Größe an wenigstens einem Erfassungsort jenseits eines vorbestimmten Schwellenwerts liegt oder außerhalb eines vorbestimmten zulässigen Wertebereichs liegt.

Folglich kann das Betriebsverfahren folgende Schritte umfassen:
- Ermitteln, ob die physikalische Größe an wenigstens einem Erfassungsort jenseits eines vorbestimmten Schwellenwerts liegt oder außerhalb eines vorbestimmten zulässigen Wertebereichs liegt,
- Ausgeben eines Warnhinweises an eine Bedienperson in Abhängigkeit dem Ergebnis der Identifikation der Flüssigkeit und in Abhängigkeit von der wenigstens einen an der Mehrzahl von Orten im Arbeitsraum der Pipettiervorrichtung erfassten physikalischen Größe, falls das Ermittlungsergebnis anzeigt, dass die physikalische Größe an wenigstens einem Erfassungsort jenseits des vorbestimmten Schwellenwerts liegt oder außerhalb des vorbestimmten zulässigen Wertebereichs liegt.

Für eine regelmäßige Überwachung der Umgebungsbedingungen, unter welchen die Pipettiervorrichtung arbeitet, kann die Steuervorrichtung dazu ausgebildet sein, nach einer durch eine Bedienperson wählbaren oder durch ein Betriebsprogramm festgelegten Anzahl von Arbeitsvorgängen oder/und nach Ablauf einer durch eine Bedienperson wählbaren oder durch ein Betriebsprogramm festgelegten Zeitspanne die wenigstens eine physikalische Größe an wenigstens einem Erfassungsort im Arbeitsraum zu erfassen. Dieser Darstellung folgend kann der Verfahrensaspekt der vorliegenden Erfindung folgende Verfahrensschritte umfassen:
- Feststellen, ob eine festgelegte Anzahl von Arbeitsvorgängen ausgeführt wurde oder/und einer festgelegte Zeitspanne abgelaufen ist, und
- Erfassen der wenigstens einen physikalischen Größe an wenigstens einem Erfassungsort im Arbeitsraum der Pipettiervorrichtung, wenn die festgelegte Anzahl von Arbeitsvorgängen ausgeführt wurde oder/und die festgelegte Zeitspanne abgelaufen ist.

Die vorliegende Erfindung wird nachfolgend anhand der beiliegenden Zeichnungen näher erläutert. Es stellt dar:
- Fig. 1: eine schematische perspektivische Ansicht einer erfindungsgemäßen Ausführungsform einer Pipettiervorrichtung,
- Fig. 2: eine schematische perspektivische Ansicht eines Trägers einer erfindungsgemäßen Sensorvorrichtung, und
- Fig. 3: eine grobschematische perspektivische Ansicht eines Sensorgehäuses der Sensorvorrichtung.

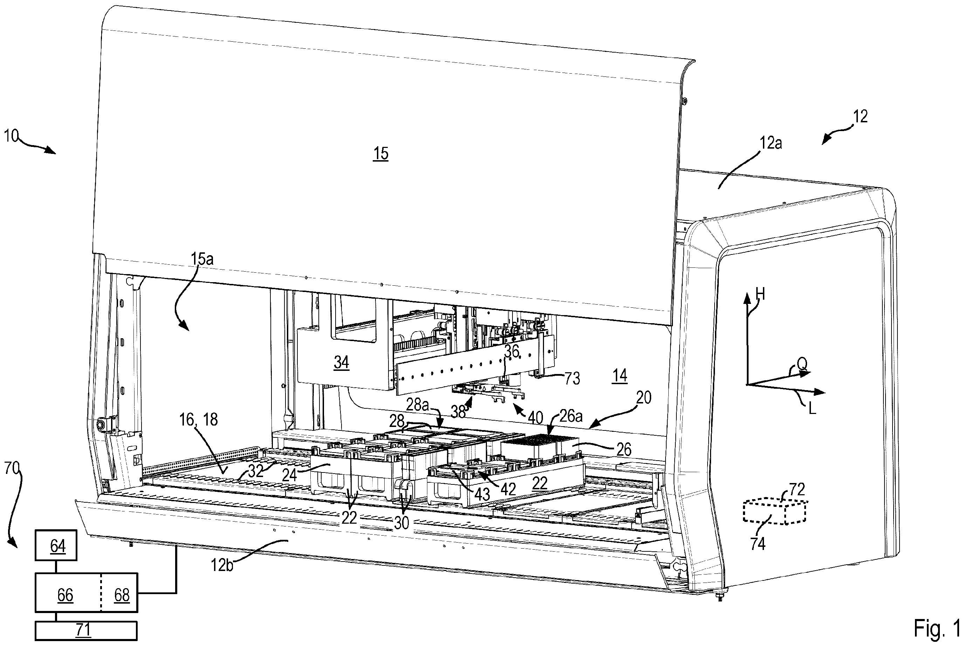

In Figur 1 ist eine erfindungsgemäße Ausführungsform einer Pipettiervorrichtung allgemein mit 10 bezeichnet. Die Pipettiervorrichtung 10 weist ein Gehäuse 12 auf, das einen Arbeitsraum 14 umgibt, der durch ein bewegliches Wandpaneel 15 für eine Bedienperson zugänglich gemacht oder unzugänglich gemacht werden kann. In dem dargestellten angehobenen Zustand gibt das Wandpaneel 15 eine Öffnung 15a zum Arbeitsraum 14 hin frei.

Eine zum Arbeitsraum 14 weisende Oberfläche 16 des Gehäusebodens 12b bildet eine Arbeitsfläche 18, auf welcher Labormaterial 20 zur Bearbeitung durch die Pipettiervorrichtung 10 abgestellt ist. Das Labormaterial 20 umfasst im vorliegenden Fall Träger 22, auf welchen kleinere Einheiten, wie etwa Rahmen 24 oder Deep-Well-Platten 26 aufgenommen sein können. In den Rahmen 24 können wiederum Mikrotiterplatten 28 aufgenommen sein. Eine Öffnungsseite 26b der Deep-Well-Platten 26 weist von der Arbeitsfläche 18 weg, so dass diese für Pipettierkanäle 36 zur Abgabe von Dosierflüssigkeit und zur Entnahme derselben aus den Platten 26 erreichbar ist. Für die Öffnungsseite 28a der Mikrotiterplatten 28, deren Öffnungen in Figur 1 nicht eigens dargestellt sind, gilt das Gleiche.

Neben den Rahmen 22 mit größerem Volumen können auch Rahmen 30 mit kleinerem Volumen angeordnet sein.

Auf der Arbeitsfläche 18 sind in regelmäßigen Muster Vorsprünge 32 angeordnet, welche ein Rastermaß definieren, gemäß dem Labormaterial 20 ausgebildet sein kann, um stabil auf der Arbeitsfläche 18 aufgenommen zu werden. Die Vorsprünge 32 sichern auf der Arbeitsfläche 18 abgestelltes Labormaterial 20 gegen ein Verrutschen auf der Arbeitsfläche 18.

Von der Decke 12a des Gehäuses 12 oder von einem deckennahen Bereich des Gehäuses 12 hängend ist eine in Längsrichtung L des Gehäuses 12 verfahrbare Trägerkonsole 34 angeordnet. An der Trägerkonsole 34 selbst sind in an sich bekannter Weise eine Mehrzahl von Pipettierkanälen 36 und gesondert davon eine Greifervorrichtung 38 längs einer Querrichtung Q des Gehäuses 12 verfahrbar angeordnet. Die Pipettierkanäle 36 sowie die Greifervorrichtung 38 mit ihren Greiferarmen 40 sind zusätzlich längs einer sowohl zur Längsrichtung L als auch zur Querrichtung Q orthogonalen Höhenrichtung H relativ zum Gehäuse 12 beweglich, sodass die Pipettierkanäle 36 wie auch die Greifervorrichtung 38 längs der Richtungen L und Q parallel zur Arbeitsfläche 18 bewegt werden können und längs der Höhenrichtung H der Arbeitsfläche 18 angenähert und von dieser wieder entfernt werden können.

In dem in Figur 1 ganz rechten Träger 22 ist an erster Stelle, also an einer dem Wandpaneel 15 oder der durch es freigegebenen Öffnung 15a nächstgelegenen Position, eine Sensorvorrichtung 42 aufgenommen, die in ihren Abmessungen, zumindest hinsichtlich des von ihrer Abstellfläche belegten Flächenbereichs den standardisierten bzw. genormten Abmessungen einer Mikrotiterplatte 28 oder einer Deep-Well-Platte 26 entspricht. Vorliegend entspricht sie auch hinsichtlich ihrer Höhenabmessung den standardisierten bzw. genormten Abmessungen einer Mikrotiterplatte 28.die Greifervorrichtung 38 kann daher die Sensoranordnung 42 wie eine Mikrotiterplatte 28 greifen und im Arbeitsraum 14 der Pipettiervorrichtung 10 verlagern.

Die Sensorvorrichtung 42 umfasst eine Sensoreinheit 55 und ein Gehäuse 43. Das Gehäuse 43 wiederum umfasst einen Trägerrahmen 44 und ein gesondert von diesem ausgebildetes Sensorgehäuse 54 der Sensoreinheit 55.

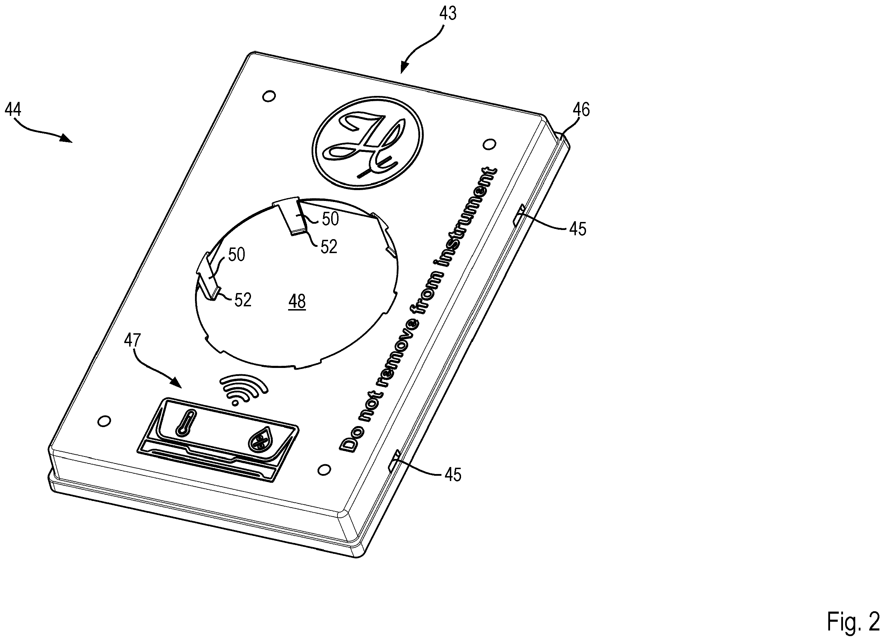

Figur 2 zeigt einen Trägerrahmen 44 der Sensorvorrichtung 42, welche als schalenförmige Körper ausgebildet ist und somit in Höhenrichtung H stapelbar ist. Hierzu verjüngt sich der Trägerrahmen 44 abmessungsmäßig in Höhenrichtung H.

Der Fußbereich 46 des Trägerrahmens 44 entspricht hinsichtlich seinen Abmessungen dem Standard ANSI SLAS 1-2014, der auch für die in Figur 1 dargestellt Mikrotiterplatten 28 gilt. In den Längsseiten vorgesehene Ausnehmungen 45 bilden eine Greifformation zum formschlüssigen Eingriff der Greiferarme 40. Eine an der Oberseite des Trägerrahmens 44 ausgebildete Symbolformation, etwa eine Einprägung oder ein Relief, kennzeichnet den Trägerrahmen 44 und damit die Sensorvorrichtung 42 als zur drahtlosen Datenkommunikation und zur Erfassung von Temperatur und Gasfeuchtigkeit geeignet.

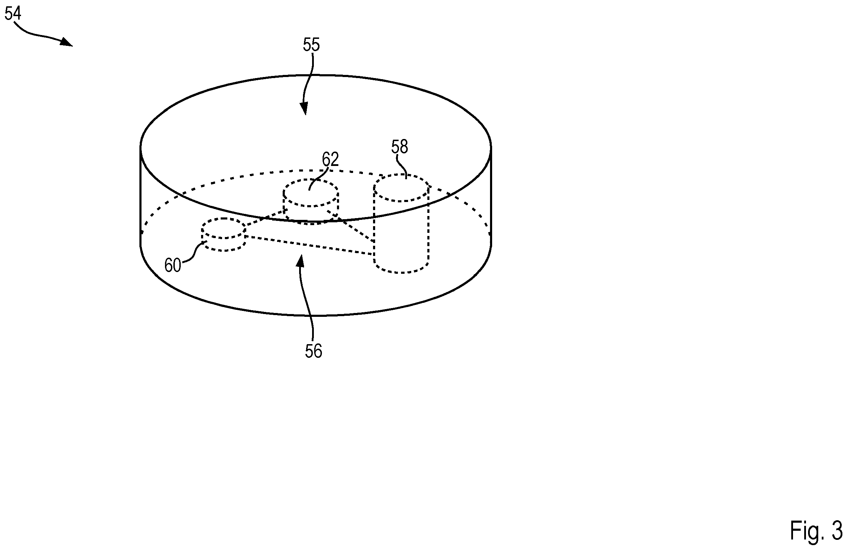

In seiner Oberseite befindet sich eine Ausnehmung 48, in welche ein im vorliegenden Beispiel zylindrisches, vom Trägerrahmen 44 gesondert ausgebildetes Sensorgehäuse 54 (s. Fig. 3) einsetzbar ist. Von der Oberseite des Trägerrahmen 44 erstrecken sich in Höhenrichtung H Haltelaschen 50 in die Abmessung 48 hinein, an welchen das gesondert ausgebildete Sensorgehäuse 54 sicher Form schlüssig gehaltert, insbesondere verrastet sein kann. Das Sensorgehäuse 54 kann jedoch auch lediglich reibschlüssig an den vertikalen Flanken der Haltelaschen 50 gegen ein Herausgleiten aus der Ausnehmung 48 immobilisiert sein und auf Haltevorsprüngen 52 ruhen, welche von dem der Oberseite des Trägerrahmen 44 fernliegenden, frei abstehenden Längsenden der Haltelaschen 50 abstehen und in die Ausnehmung 48 auskragen.

Die in dem Sensorgehäuse 54 untergebrachte Sensoreinheit 55 mit ihrer Elektronik 56 umfasst eine Energieversorgung 58 zur Versorgung der Sensorvorrichtung 42 mit elektrischer Energie, wenigstens ein Sensorelement 60 zur Erfassung einer physikalischen Größe, beispielsweise ein Thermoelement zur Temperaturmessung oder/und ein Hygrometer zur Erfassung einer Gasfeuchte, insbesondere Luftfeuchte im Bereich der Umgebung des Sensorgehäuses 54. Die Sensoreinheit 55 umfasst weiter eine Sende/Empfangseinrichtung 62 zur bidirektionalen Übertragung von Signalen zu einer Sende/Empfangseinrichtung 64, welche mit einer Steuervorrichtung 66 der Pipettiervorrichtung 10 gekoppelt ist. Die elektronische Datenverarbeitungsvorrichtung 70 umfasst die Sende/Empfangseinrichtung 64 und die Steuervorrichtung 66, letztere etwa in Gestalt eines Mikroprozessors. Die Steuervorrichtung 66 umfasst wiederum einen Datenspeicher 68. Der Trägerrahmen 44 ist vorzugsweise frei von Sensorelektronik.

Durch eine Eingabe/Ausgabevorrichtung 71 können Daten in die Steuervorrichtung 66 und in die elektronische Datenverarbeitungsvorrichtung 70 eingegeben werden. So können beispielsweise durch die Pipettiervorrichtung 10 zu verarbeitende Flüssigkeiten identifiziert werden. Eine zusätzliche oder alternative Möglichkeit der Identifikation einer zu verarbeitenden Flüssigkeit bietet eine Barcode- oder QR-Code- oder allgemein Code-Lesevorrichtung 73, beispielsweise an der Trägerkonsole 34.

Die Steuervorrichtung 66 steuert den Betrieb der Pipettiervorrichtung 36 und der Greifervorrichtung 38 und mittels Signalen, die zwischen den Sende/Empfangseinrichtungen 62 und 66 übertragen werden, auch den Betrieb der Sensorvorrichtung 42.

Mittels der Greifervorrichtung 38 kann die Steuervorrichtung 66 der Pipettiervorrichtung 10 die Sensorvorrichtung 42 an einen beliebigen Ort im Arbeitsraum 14 verbringen, an welchem die Sensorvorrichtung 42 abstellbar ist oder durch die Greifervorrichtung 38 gehalten werden kann. Wegen der mit einer Mikrotiterplatte 28 im Wesentlichen identischen Abmessungen ist die Sensorvorrichtung 42 durch die Greifervorrichtung 38 wie eine Mikrotiterplatte 28 verlagerbar. So kann die Steuervorrichtung 66 ein räumliches Profil des Arbeitsraums 14 hinsichtlich der wenigstens einen von der Sensorvorrichtung 42 erfassbaren physikalischen Größe erstellen. Dadurch ist es beispielsweise möglich, eine Mikrotiterplatte 28 oder eine Deep-Well-Platte 26 mit temperaturempfindlichem Inhalt an jenen Ort auf der Arbeitsfläche 18 zu verbringen oder einer Bedienperson einen solchen Ort vorzuschlagen, welcher eine Temperatur aufweist, die am weitesten von einer Überschreitung einer Grenztemperatur entfernt ist, bei welcher der Inhalt zu verderben droht. Aufgrund lokal vorhandener Antriebe, beispielsweise zur Bewegung der Pipettierkanäle 36 und der Greifervorrichtung 38 oder der Trägerkonsole 34, kann der Arbeitsraum 14 durchaus lokal unterschiedliche Temperaturen aufweisen. Gleiches kann für lokale Gasfeuchtigkeit den im Arbeitsraum gelten, etwa wenn von der Pipettiervorrichtung 10 in Teilbereichen der Arbeitsfläche 18 für eine bestimmte Zeitdauer leicht flüchtige Dosierflüssigkeiten zu verarbeiten waren, in anderen Bereichen jedoch nicht.

Die Pipettiervorrichtung 10 kann auf ihrer Arbeitsfläche 18 einen Ladebereich 72 aufweisen, auf welchem die Sensorvorrichtung 42 angeordnet werden kann, wenn die Energieversorgung 58 Aufladung benötigt. Die Energieversorgung 58 ist in der Regel ein elektrischer Akkumulator. Die Energieversorgung 58 kann dann als elektrische Energieversorgung durch eine induktive Ladevorrichtung 74 berührungslos aufgeladen werden. Die Energieversorgung 58 kann jedoch auch eine austauschbare elektrische Batterie sein.

Durch die Stapelbarkeit der Sensoranordnung 42 mit derselben Norm abmessungsmäßig unterfallenden Gefäßplatten 26 oder/und 28 kann die Sensoranordnung 42 auch auf eine solche Gefäßplatte, etwa auf eine Mikrotiterplatte 28 oder auf eine Deep-Well-Platte 26 aufgesetzt werden, um eine Temperatur der Gefäßplatte selbst oder ihres Inhalts so genau wie möglich zu bestimmen.

Die Steuervorrichtung 66 kann dazu ausgebildet sein, Messungen der physikalischen Größe durch die Sensorvorrichtung 42 im Arbeitsraum 14 in vorbestimmter Regelmäßigkeit auszuführen, wobei die Regelmäßigkeit durch Zeitablauf oder durch eine Anzahl von Arbeitsvorgängen vorgegeben sein kann.

## Patentansprüche

1. Pipettiervorrichtung (10), umfassend
- einen Arbeitsraum (14) über einer Arbeitsfläche (18), welche zur Bereitstellung von Labormaterial (20) ausgebildet ist,
- wenigstens einen Pipettierkanal (36), welcher relativ zur Arbeitsfläche (18) beweglich ist, wobei der Pipettierkanal (36) sowohl parallel zur Arbeitsfläche (18) beweglich, als auch an die Arbeitsfläche (18) annäherbar und von dieser entfernbar ist, wobei der Pipettierkanal (36) dazu ausgebildet ist, Dosierflüssigkeit in wenigstens ein vom Labormaterial (20) im Arbeitsraum (14) umfasstes Gefäß (26, 28) abzugeben oder/und von diesem aufzunehmen,
- eine Sensorvorrichtung (42), welche dazu ausgebildet ist, wenigstens eine physikalische Größe
• eines Abschnitts der Pipettiervorrichtung (10) oder/und
• von im Arbeitsraum (14) bereitgestelltem Labormaterial (20) oder/und
• einer Dosierflüssigkeit oder/und
• eines die Pipettiervorrichtung (10) umgebenden Gases
zu erfassen, und
- eine elektronische Datenverarbeitungsvorrichtung (70), welche zur Verarbeitung von Betriebsdaten oder/und Zustandsdaten der Pipettiervorrichtung (10) ausgebildet ist,
wobei die Sensorvorrichtung (42) einen Sender (62) aufweist, welcher dazu ausgebildet ist, Signale von der Sensorvorrichtung (42) drahtlos zur elektronischen Datenverarbeitungsvorrichtung (70) zu übertragen, und dass die elektronische Datenverarbeitungsvorrichtung (70) einen Empfänger (64) aufweist, welcher dazu ausgebildet ist, Signale von der Sensorvorrichtung (42) drahtlos zu empfangen, wobei die Pipettiervorrichtung (10) wenigstens eine Greifervorrichtung (38) umfasst, welche sowohl parallel zur Arbeitsfläche (18) beweglich ist, als auch an die Arbeitsfläche (18) annäherbar und von dieser entfernbar ist,
**dadurch gekennzeichnet, dass** die Sensorvorrichtung (42) eine von der Greifervorrichtung (38) lösbar greifbare Greifformation (45) aufweist, so dass die Sensorvorrichtung (42) durch die Greifervorrichtung (38) zwischen wenigstens zwei Orten im Arbeitsraum (14) verlagerbar ist.

2. Pipettiervorrichtung (10) nach Anspruch 1,
**dadurch gekennzeichnet, dass** sowohl der Sender (62) der Sensorvorrichtung (42) als auch der Empfänger (64) der elektronischen Datenverarbeitungsvorrichtung (70) jeweils zur bidirektionalen Signalübertragung ausgebildete Sende-/Empfangseinrichtungen (62, 64) sind, so dass Signale bidirektional drahtlos zwischen der Sensorvorrichtung (42) und der elektronischen Datenverarbeitungsvorrichtung (70) übertragbar sind.

3. Pipettiervorrichtung (10) nach einem der vorhergehenden Ansprüche, **dadurch gekennzeichnet, dass** die Sensorvorrichtung (42) ein Gehäuse (43) aufweist, dessen auf der Arbeitsfläche (18) abstellbarer Fußbereich (46) einen für Labormaterial (20) standardisierten Normflächenbereich einnimmt.

4. Pipettiervorrichtung (10) nach einem der vorhergehenden Ansprüche, **dadurch gekennzeichnet, dass** das Gehäuse (43) der Sensorvorrichtung (42) einen Trägerrahmen (44) aufweist, in welchem eine Sensoreinheit (55), vorzugsweise lösbar, aufgenommen ist.

5. Pipettiervorrichtung (10) nach einem der vorhergehenden Ansprüche, **dadurch gekennzeichnet, dass** die Sensorvorrichtung (42) einen aufladbaren elektrischen Energiespeicher (58) aufweist, wobei der Arbeitsraum (14) einen Ladebereich (72) aufweist, sodass der elektrische Energiespeicher (58) dann aufgeladen wird, wenn sich die Sensorvorrichtung (42) im Ladebereich (72) des Arbeitsraums (14) befindet, wobei bevorzugt der elektrische Energiespeicher (58) der Sensorvorrichtung (42) im Ladebereich (72) berührungslos durch induktive Kopplung mit einer Ladevorrichtung (74) aufladbar ist.

6. Pipettiervorrichtung (10) nach einem der vorhergehenden Ansprüche,
**dadurch gekennzeichnet, dass** die Sensorvorrichtung (42) wenigstens ein thermisches Sensorelement (60) zur Erfassung einer Temperatur oder/und wenigstens einen Gasfeuchtigkeitssensor zur Erfassung eines Feuchtegehalts der die Sensorvorrichtung (42) lokal umgebenden Atmosphäre oder/und einen Drucksensor zur Erfassung eines Drucks der die Sensorvorrichtung (42) lokal umgebenden Atmosphäre aufweist.

7. Pipettiervorrichtung (10) nach einem der vorhergehenden Ansprüche,
**dadurch gekennzeichnet, dass** sie eine Steuervorrichtung (66) aufweist, welche dazu ausgebildet ist, Bewegungsabläufe und Funktionsabläufe der Pipettiervorrichtung (10) zu steuern, wobei die Steuervorrichtung (66) dazu ausgebildet ist, durch Verlagern der Sensorvorrichtung (42) an eine Mehrzahl von Orten im Arbeitsraum der Pipettiervorrichtung (10) wenigstens eine physikalische Größe an der Mehrzahl von Orten im Arbeitsraum (14) zu erfassen und zu speichern.

8. Pipettiervorrichtung (10) nach Anspruch 7,
**dadurch gekennzeichnet, dass** die Pipettiervorrichtung (10) eine Identifikationseinrichtung zur Identifikation einer durch die Pipettiervorrichtung (10) zu verarbeitenden Flüssigkeit aufweist, wobei die Steuervorrichtung (66) dazu ausgebildet ist, abhängig von der Identifikation der Flüssigkeit und abhängig von der wenigstens einen an der Mehrzahl von Orten im Arbeitsraum (14) der Pipettiervorrichtung (10) erfassten physikalischen Größe einen bevorzugten Aufbewahrungsort der identifizierten Flüssigkeit im Arbeitsraum (14) der Pipettiervorrichtung (10) zu ermitteln und den ermittelten Aufbewahrungsort durch eine Ausgabevorrichtung (71) an eine Bedienperson auszugeben oder/und die Flüssigkeit an den bevorzugten Anbringungsort zu verbringen.

9. Pipettiervorrichtung (10) nach Anspruch 7 oder 8,
**dadurch gekennzeichnet, dass** die Pipettiervorrichtung (10) eine Identifikationseinrichtung zur Identifikation einer durch die Pipettiervorrichtung (10) zu verarbeitenden Flüssigkeit aufweist, wobei die Steuervorrichtung (66) dazu ausgebildet ist, abhängig von der Identifikation der Flüssigkeit und abhängig von der wenigstens einen an der Mehrzahl von Orten im Arbeitsraum (14) der Pipettiervorrichtung (10) erfassten physikalischen Größe einen Warnhinweis an eine Bedienperson auszugeben, falls die physikalische Größe an wenigstens einem Erfassungsort jenseits eines vorbestimmten Schwellenwerts liegt oder außerhalb eines vorbestimmten zulässigen Wertebereichs liegt.

10. Pipettiervorrichtung (10) nach einem der Ansprüche 7 bis 9,
**dadurch gekennzeichnet, dass** die Steuervorrichtung (66) dazu ausgebildet ist, nach einer durch eine Bedienperson wählbaren oder durch ein Betriebsprogramm festgelegten Anzahl von Arbeitsvorgängen oder/und nach Ablauf einer durch eine Bedienperson wählbaren oder durch ein Betriebsprogramm festgelegten Zeitspanne die wenigstens eine physikalische Größe an wenigstens einem Erfassungsort im Arbeitsraum (14) der Pipettiervorrichtung (10) zu erfassen.

11. Pipettiervorrichtung (10) nach einem der vorhergehenden Ansprüche,
**dadurch gekennzeichnet, dass** die Sensorvorrichtung (42) ein Sensorelement (60) zur Erfassung einer physikalischen Größe umfasst und weiter eine Drahtlos-Signalübertragungseinrichtung (62) zur wenigstens unidirektionalen Übertragung von Signalen von der Sensorvorrichtung (42) weg umfasst, wobei ein Gehäuse (43) der Sensorvorrichtung (42) wenigstens in einem eine Aufstandsfläche der Sensorvorrichtung (42) definierenden Fußbereich (46) eine durch eine Norm definierte Normabmessung aufweist, wie sie auch für Gefäßplatten (26, 28) gilt, die zur Verwendung in Pipettiervorrichtungen (10) geeignet und bestimmt sind, wobei die Sensorvorrichtung (42) eine lösbar greifbare Greifformation (45) aufweist.

12. Pipettiervorrichtung (10) nach Anspruch 11,
**dadurch gekennzeichnet, dass** das Gehäuse (43) der Sensorvorrichtung (42) mit einer Gefäßplatte (26, 28) mit Normabmessung stapelbar ist, insbesondere durch Aufsetzen des Gehäuses (43) auf eine Öffnungsseite (26a, 28a) der Gefäßplatte (26, 28) stapelbar ist, wobei die Öffnungsseite (26a, 28a) jene Seite ist, welche die Öffnungen einer Mehrzahl von Gefäßmulden enthält, durch welche Flüssigkeit in eine Gefäßmulde abgegeben und aus dieser entnommen werden kann.

13. Pipettiervorrichtung (10) nach Anspruch 11 oder 12, unter Einbeziehung des Anspruchs 4,
**dadurch gekennzeichnet, dass** die Sensorvorrichtung (42) eine ein Sensorelement (60) aufweisende Sensoreinheit (55) mit einem gesonderten Sensorgehäuse (54) aufweist, welches in dem Trägerrahmen (44) fest, aber lösbar aufgenommen ist, wobei der die Normabmessung aufweisende Fußbereich (46) vom Trägerrahmen (44) gebildet ist, wobei bevorzugt das gesonderte Sensorgehäuse (54) zusammen mit dem Trägerrahmen (44) das Gehäuse (43) der Sensorvorrichtung (42) bildet.

14. Betriebsverfahren zur Durchführung eines Messverfahrens an einer Pipettiervorrichtung (10), welche nach einem der vorhergehenden Ansprüche ausgebildet ist, umfassend die folgenden Verfahrensschritte:
- Verlagern der Sensorvorrichtung (42) mittels der Greifervorrichtung (38) der Pipettiervorrichtung (10) an eine Mehrzahl von Orten im Arbeitsraum der Pipettiervorrichtung (10),
- Erfassen von wenigstens einer physikalischen Größe an jedem aus der Mehrzahl von Orten im Arbeitsraum (14),
- drahtloses Übertragen von Signalen zwischen der Sensorvorrichtung (42) und der elektronischen Datenverarbeitungsvorrichtung (70), und
- Speichern der wenigstens einen erfassten physikalischen Größe in Zuordnung zu ihrem Erfassungsort.

15. Betriebsverfahren nach Anspruch 14,
umfassend die folgenden weiteren Verfahrensschritte:
- Identifizieren einer durch die Pipettiervorrichtung (10) zu verarbeitenden Flüssigkeit,
- Ermitteln eines bevorzugten Aufbewahrungsorts der identifizierten Flüssigkeit im Arbeitsraum (14) der Pipettiervorrichtung (10) in Abhängigkeit von dem Ergebnis der Identifikation der Flüssigkeit und in Abhängigkeit von der wenigstens einen an der Mehrzahl von Orten im Arbeitsraum (14) der Pipettiervorrichtung (10) erfassten physikalischen Größe, sowie
a) Ausgeben des ermittelten Aufbewahrungsorts durch eine Ausgabevorrichtung (71) an eine Bedienperson
oder/und
b) Verbringen der Flüssigkeit an den bevorzugten Anbringungsort.

16. Betriebsverfahren nach Anspruch 14 oder 15,
umfassend die folgenden weiteren Verfahrensschritte:
- Identifizieren einer durch die Pipettiervorrichtung (10) zu verarbeitenden Flüssigkeit,
- Ermitteln, ob die physikalische Größe an wenigstens einem Erfassungsort jenseits eines vorbestimmten Schwellenwerts liegt oder außerhalb eines vorbestimmten zulässigen Wertebereichs liegt,
- Ausgeben eines Warnhinweises an eine Bedienperson in Abhängigkeit dem Ergebnis der Identifikation der Flüssigkeit und in Abhängigkeit von der wenigstens einen an der Mehrzahl von Orten im Arbeitsraum (14) der Pipettiervorrichtung (10) erfassten physikalischen Größe, falls das Ermittlungsergebnis anzeigt, dass die physikalische Größe an wenigstens einem Erfassungsort jenseits des vorbestimmten Schwellenwerts liegt oder außerhalb des vorbestimmten zulässigen Wertebereichs liegt.

17. Betriebsverfahren nach einem der Ansprüche 14 bis 16,
umfassend die folgenden weiteren Verfahrensschritte:
- Erfassen der wenigstens einen physikalischen Größe an wenigstens einem Erfassungsort im Arbeitsraum (14) der Pipettiervorrichtung (10) nach einer festgelegten Anzahl von Arbeitsvorgängen oder/und nach Ablauf einer festgelegten Zeitspanne.

## Claims

1. A pipetting device (10), comprising
- a working space (14) above a working surface (18), which is adapted for the provision of laboratory material (20),
- at least one pipetting channel (36) which is movable relative to the working surface (18), wherein the pipetting channel (36) is both movable parallel to the working surface (18) and can be moved closer to and away from the working surface (18), wherein the pipetting channel (36) is adapted for dispensing dosing liquid into or/and receiving dosing liquid from at least one vessel (26, 28) comprised by the laboratory material (20) in the working space (14),
- a sensor device (42) which is adapted for detecting at least one physical quantity
• of a section of the pipetting device (10) or/and
• of laboratory material (20) provided in the working space (14) or/and
• of a dosing liquid or/and
• of a gas surrounding the pipetting device (10),
and
- an electronic data processing device (70) which is adapted for processing operating data and/or status data of the pipetting device (10),
wherein the sensor device (42) has a transmitter (62) which is adapted for transmitting signals from the sensor device (42) wirelessly to the electronic data processing device (70), and in that the electronic data processing device (70) has a receiver (64) which is adapted for receiving signals from the sensor device (42) wirelessly, wherein the pipetting device (10) comprises at least one gripper device (38) which is both movable parallel to the working surface (18) and can be moved closer to and away from the working surface (18),
**characterized in that** the sensor device (42) has a gripping formation (45) which can be releasably gripped by the gripper device (38), so that the sensor device (42) can be displaced by the gripper device (38) between at least two locations in the working space (14).

2. The pipetting device (10) according to claim 1,
**characterized in that** both the transmitter (62) of the sensor device (42) and the receiver (64) of the electronic data processing device (70) are each transmitting/receiving devices (62, 64) adapted for bidirectional signal transmission, so that signals can be transmitted bidirectionally wirelessly between the sensor device (42) and the electronic data processing device (70).

3. The pipetting device (10) according to one of the preceding claims, **characterized in that** the sensor device (42) has a housing (43) whose base region (46), which can be placed on the working surface (18), occupies a standard surface area standardized for laboratory material (20).

4. The pipetting device (10) according to one of the preceding claims, **characterized in that** the housing (43) of the sensor device (42) has a carrier frame (44) in which a sensor unit (55) is accommodated, preferably detachably accommodated.

5. The pipetting device (10) according to one of the preceding claims, **characterized in that** the sensor device (42) has a rechargeable electrical energy store (58), wherein the working space (14) has a charging area (72), so that the electrical energy store (58) is charged when the sensor device (42) is located in the charging area (72) of the working space (14), wherein preferably the electrical energy store (58) of the sensor device (42) in the charging area (72) can be charged contactlessly by inductive coupling with a charging device (74).

6. The pipetting device (10) according to one of the preceding claims, **characterized in that** the sensor device (42) has at least one thermal sensor element (60) for detecting a temperature or/and at least one gas humidity sensor for detecting a humidity content of the atmosphere locally surrounding the sensor device (42) or/and a pressure sensor for detecting a pressure of the atmosphere locally surrounding the sensor device (42).

7. The pipetting device (10) according to one of the preceding claims, **characterized in that** it has a control device (66) which is adapted for controlling movement sequences and functional sequences of the pipetting device (10), wherein the control device (66) is adapted for detecting and storing at least one physical quantity at the plurality of locations in the working space (14) by displacing the sensor device (42) to a plurality of locations in the working space of the pipetting device (10).

8. The pipetting device (10) according to claim 7,
**characterized in that** the pipetting device (10) has an identification device for identifying a liquid to be processed by the pipetting device (10), wherein the control device (66) is adapted for determining a preferred storage location of the identified liquid in the working space (14) of the pipetting device (10) depending on the identification of the liquid and depending on the at least one physical quantity detected at the plurality of locations in the working space (14) of the pipetting device (10) and for outputting the determined storage location to an operator by an output device (71) or/and for transferring the liquid to the preferred location.

9. The pipetting device (10) according to claim 7 or 8,
**characterized in that** the pipetting device (10) has an identification device for identifying a liquid to be processed by the pipetting device (10), wherein the control device (66) is adapted for outputting a warning to an operator depending on the identification of the liquid and depending on the at least one physical quantity detected at the plurality of locations in the working space (14) of the pipetting device (10), if the physical quantity is beyond a predetermined threshold value at at least one detection location or is outside a predetermined permissible value range.

10. The pipetting device (10) according to any one of claims 7 to 9, **characterized in that** the control device (66) is adapted for detecting the at least one physical quantity at at least one detection location in the working space (14) of the pipetting device (10) after a number of work processes selectable by an operator or defined by an operating program or/and after the expiry of a time period selectable by an operator or defined by an operating program.

11. The pipetting device (10) according to one of the preceding claims, **characterized in that** the sensor device (42) comprises a sensor element (60) for detecting a physical quantity and further comprises a wireless signal transmission device (62) for at least unidirectional transmission of signals away from the sensor device (42), wherein a housing (43) of the sensor device (42) has, at least in a base region (46) defining a contact surface of the sensor device (42), a standard dimension defined by a standard, such as also applies to vessel plates (26, 28) which are suitable and intended for use in pipetting devices (10), wherein the sensor device (42) has a releasably grippable gripping formation (45).

12. The pipetting device (10) according to claim 11,
**characterized in that** the housing (43) of the sensor device (42) is stackable with a vessel plate (26, 28) of standard dimension, in particular by placing the housing (43) on an opening side (26a, 28a) of the vessel plate (26, 28), wherein the opening side (26a, 28a) is that side which contains the openings of a plurality of vessel troughs through which liquid can be dispensed into and removed from a vessel trough.

13. The pipetting device (10) according to claim 11 or 12, including claim 4, **characterized in that** the sensor device (42) comprises a sensor unit (55) having a sensor element (60) with a separate sensor housing (54) which is fixedly but detachably received in the carrier frame (44), wherein the base region (46) having the standard dimension is formed by the carrier frame (44), wherein preferably the separate sensor housing (54) together with the carrier frame (44) forms the housing (43) of the sensor device (42).

14. An operating method for carrying out a measuring method on a pipetting device (10) which is adapted according to one of the preceding claims, comprising the following process steps:
- moving the sensor device (42) by means of the gripper device (38) of the pipetting device (10) to a plurality of locations in the working space of the pipetting device (10),
- detecting at least one physical quantity at each of a plurality of locations in the working space (14),
- wirelessly transmitting signals between the sensor device (42) and the electronic data processing device (70), and
- storing the at least one detected physical quantity in association to its detection location.

15. The operating method according to claim 14,
comprising the following further process steps:
- identifying a liquid to be processed by the pipetting device (10),
- determining a preferred storage location of the identified liquid within the working space (14) of the pipetting device (10) depending on the result of the identification of the liquid and depending on the at least one physical quantity detected at the plurality of locations in the working space (14) of the pipetting device (10), and
a) outputting the determined storage location by an output device (71) to an operator
or/and
b) moving the liquid to the preferred storage location.

16. The operating method according to claim 14 or 15,
comprising the following further process steps:
- identifying a liquid to be processed by the pipetting device (10),
- determining whether the physical quantity at at least one detection location is beyond a predetermined threshold value or is outside a predetermined permissible value range,
- outputting a warning to an operator depending on the result of the identification of the liquid and depending on the at least one physical quantity detected at the plurality of locations in the working space (14) of the pipetting device (10), if the result of the determination indicates that the physical quantity at at least one detection location is beyond the predetermined threshold value or is outside the predetermined permissible value range.

17. The operating method according to any one of claims 14 to 16, comprising the following further process steps:
- detecting the at least one physical quantity at at least one detection location in the working space (14) of the pipetting device (10) after a defined number of work processes and/or after a defined period of time has elapsed .

## Revendications

1. Un dispositif de pipetage (10) comprenant
- un espace de travail (14) au-dessus d'une surface de travail (18), adapté à la mise à disposition de matériel de laboratoire (20),
- au moins un canal de pipetage (36) mobile par rapport à la surface de travail (18), dans lequel le canal de pipetage (36) est à la fois mobile parallèlement à la surface de travail (18) et peut être rapproché et retiré de la surface de travail (18), dans lequel le canal de pipetage (36) est adapté pour distribuer du liquide de dosage dans ou/et pour recevoir du liquide de dosage de au moins un récipient (26, 28) compris par le matériel de laboratoire (20) dans l'espace de travail (14),
- un dispositif de capteur (42) adapté pour détecter au moins une quantité physique
• d'une section du dispositif de pipetage (10) ou/et
• du matériel de laboratoire (20) fourni dans l'espace de travail (14) ou/et
• d'un liquide de dosage ou/et
• d'un gaz entourant le dispositif de pipetage (10),
et
- un dispositif électronique de traitement des données (70) adapté pour traiter des données de fonctionnement et/ou des données d'état du dispositif de pipetage (10),
dans lequel le dispositif de capteur (42) comprend un émetteur (62) adapté pour transmettre sans fil des signaux du dispositif de capteur (42) au dispositif électronique de traitement des données (70), et dans lequel le dispositif électronique de traitement des données (70) comprend un récepteur (64) adapté pour recevoir sans fil des signaux du dispositif de capteur (42), dans lequel le dispositif de pipetage (10) comprend au moins un dispositif de préhension (38) qui est à la fois mobile parallèlement à la surface de travail (18) et qui peut être rapproché et retiré de la surface de travail (18),
**caractérisé en ce que** le dispositif de capteur (42) possède une formation de préhension (45) qui peut être saisie de manière amovible par le dispositif de préhension (38), de sorte que le dispositif de capteur (42) peut être déplacé par le dispositif de préhension (38) entre au moins deux endroits dans l'espace de travail (14).

2. Le dispositif de pipetage (10) selon la revendication 1,
**caractérisé en ce que l**'émetteur (62) du dispositif de capteur (42) et le récepteur (64) du dispositif électronique de traitement des données (70) sont tous deux des dispositifs de transmission/réception (62, 64) adaptés à la transmission bidirectionnelle de signaux, de sorte que les signaux peuvent être transmis bidirectionnellement sans fil entre le dispositif de capteur (42) et le dispositif électronique de traitement des données (70).

3. Le dispositif de pipetage (10) selon l'une des revendications précédentes, **caractérisé en ce que** le dispositif de capteur (42) comprend un boîtier (43) dont la zone de base (46), qui peut être placée sur la surface de travail (18), occupe une zone de surface normalisée standardisée pour le matériel de laboratoire (20).

4. Le dispositif de pipetage (10) selon l'une des revendications précédentes, **caractérisé en ce que** le boîtier (43) du dispositif de capteur (42) comprend un cadre de support (44) dans lequel une unité de détection (55) est logée, de préférence de manière amovible.

5. Le dispositif de pipetage (10) selon l'une des revendications précédentes, **caractérisé en ce que** le dispositif de capteur (42) possède une réserve d'énergie électrique (58) rechargeable, dans lequel l'espace de travail (14) possède une zone de chargement (72), de sorte que la réserve d'énergie électrique (58) est chargée lorsque le dispositif de capteur (42) est situé dans la zone de chargement (72) de l'espace de travail (14), dans lequel, de préférence, la réserve d'énergie électrique (58) du dispositif de capteur (42) dans la zone de chargement (72) peut être chargée sans contact par couplage inductif avec un dispositif de chargement (74).

6. Le dispositif de pipetage (10) selon l'une des revendications précédentes, **caractérisé en ce que** le dispositif de capteur (42) comprend au moins un élément de détection thermique (60) pour détecter une température ou/et au moins un capteur d'humidité gazeuse pour détecter un taux d'humidité de l'atmosphère entourant localement le dispositif de capteur (42) ou/et un capteur de pression pour détecter une pression de l'atmosphère entourant localement le dispositif de capteur (42).

7. Le dispositif de pipetage (10) selon l'une des revendications précédentes, **caractérisé en ce qu'**il comprend un dispositif de commande (66) adapté pour commander des séquences de mouvement et des séquences fonctionnelles du dispositif de pipetage (10), dans lequel le dispositif de commande (66) est adapté pour détecter et stocker au moins une quantité physique à la pluralité d'endroits dans l'espace de travail (14) en déplaçant le dispositif de capteur (42) vers une pluralité d'endroits dans l'espace de travail du dispositif de pipetage (10).

8. Le dispositif de pipetage (10) selon la revendication 7,
**caractérisé en ce que** le dispositif de pipetage (10) possède un dispositif d'identification pour identifier un liquide à traiter par le dispositif de pipetage (10), dans lequel le dispositif de commande (66) est, adapté pour déterminer un endroit de stockage préféré du liquide identifié dans l'espace de travail (14) du dispositif de pipetage (10) en fonction de l'identification du liquide et en fonction d'au moins une quantité physique détectée à la pluralité d'endroits dans l'espace de travail (14) du dispositif de pipetage (10) et pour communiquer l'endroit de stockage déterminé à un opérateur par un dispositif de sortie (71) ou/et pour transférer le liquide vers l'endroit de stockage préféré.

9. Le dispositif de pipetage (10) selon la revendication 7 ou 8,
**caractérisé en ce que** le dispositif de pipetage (10) comprend un dispositif d'identification pour identifier un liquide à traiter par le dispositif de pipetage (10), dans lequel le dispositif de commande (66) est adapté pour émettre un avertissement à un opérateur en fonction de l'identification du liquide et en fonction d'au moins une quantité physique détectée à la pluralité d'endroits dans l'espace de travail (14) du dispositif de pipetage (10), si la quantité physique est au-delà d'une valeur seuil prédéterminée à au moins un endroit de détection ou se situe en dehors d'une plage de valeurs admissibles prédéterminée.

10. Le dispositif de pipetage (10) selon l'une des revendications 7 à 9, **caractérisé en ce que** le dispositif de commande (66) est adapté pour détecter au moins une quantité physique à au moins un endroit de détection dans l'espace de travail (14) du dispositif de pipetage (10) après un nombre de processus de travail sélectionnable par un opérateur ou défini par un programme opérationnel ou/et après l'expiration d'une période de temps sélectionnable par un opérateur ou définie par un programme opérationnel.

11. Le dispositif de pipetage (10) selon l'une des revendications précédentes, **caractérisé en ce que** le dispositif de capteur (42) comprend un élément de détection (60) pour détecter une quantité physique et comprend en outre un dispositif de transmission de signaux sans fil (62) pour la transmission au moins unidirectionnelle de signaux loin du dispositif de capteur (42), dans lequel un boîtier (43) du dispositif de capteur (42) a, au moins dans une zone de base (46) définissant une surface de contact du dispositif de capteur (42), une dimension standard définie par une norme, telle qu'elle s'applique également aux plaques de récipient (26, 28) qui sont appropriées et destinées à être utilisées dans les dispositifs de pipetage (10), dans lequel le dispositif de capteur (42) présente une formation de préhension libérable (45).

12. Le dispositif de pipetage (10) selon la revendication 11,
**caractérisé en ce que le** boîtier (43) du dispositif de capteur (42) est empilable avec une plaque de récipient (26, 28) de dimensions standard, en particulier en plaçant le boîtier (43) sur un côté d'ouverture (26a, 28a) de la plaque de récipient (26, 28), dans lequel le côté d'ouverture (26a, 28a) est le côté qui contient les ouvertures d'une pluralité d'auges de récipient à travers lesquelles le liquide peut être distribué dans et retiré d'une auge de récipient.

13. Le dispositif de pipetage (10) selon la revendication 11 ou 12, y compris la revendication 4,
**caractérisé en ce que** le dispositif de capteur (42) comprend une unité de détection (55) comportant un élément de détection (60) avec un boîtier de détection séparé (54) qui est reçu de manière fixe mais amovible dans le cadre de support (44), dans lequel la zone de base (46) ayant la dimension standard est formée par le cadre de support (44), dans lequel, de préférence, le boîtier de détection séparé (54) forme avec le cadre de support (44) le boîtier (43) du dispositif de capteur (42).

14. Une méthode opérationnelle pour la mise en oeuvre d'une méthode de mesure sur un dispositif de pipetage (10) adapté selon l'une des revendications précédentes, comprenant les étapes de processus suivantes :
- déplacer le dispositif de capteur (42) au moyen du dispositif de préhension (38) du dispositif de pipetage (10) vers une pluralité d'endroits dans l'espace de travail du dispositif de pipetage (10),
- détecter au moins une quantité physique à chacun de la pluralité d'endroits dans l'espace de travail (14),
- transmettre sans fil les signaux entre le dispositif de capteur (42) et le dispositif électronique de traitement des données (70), et
- stocker l'au moins une quantité physique détectée en association avec son endroit de détection.

15. La méthode opérationnelle selon la revendication 14,
comprenant les étapes suivantes de processus :
- identifier un liquide à traiter par le dispositif de pipetage (10),
- déterminer un endroit de stockage préféré du liquide identifié dans l'espace de travail (14) du dispositif de pipetage (10) en fonction du résultat de l'identification du liquide et en fonction d'au moins une quantité physique détectée à la pluralité d'endroits dans l'espace de travail (14) du dispositif de pipetage (10), et
a) communiquer à un opérateur l'endroit de stockage déterminé au moyen d'un dispositif de sortie (71)
ou/et
b) déplacer le liquide vers l'endroit de stockage préféré.

16. La méthode opérationnelle selon la revendication 14 ou 15, comprenant les étapes suivantes de processus :
- identifier un liquide à traiter par le dispositif de pipetage (10),
- déterminer si la quantité physique à au moins un endroit de détection est au-delà d'une valeur seuil prédéterminée ou se situe en dehors d'une plage de valeurs admissibles prédéterminée,
- émettre un avertissement à l'intention d'un opérateur en fonction du résultat de l'identification du liquide et en fonction d'au moins une quantité physique détectée à la pluralité d'endroits dans l'espace de travail (14) du dispositif de pipetage (10), si le résultat de la détermination indique que la quantité physique à au moins un endroit de détection est au-delà de la valeur seuil prédéterminée ou se situe en dehors de la plage de valeurs admissibles prédéterminée.

17. La méthode opérationnelle selon l'une des revendications 14 à 16, comprenant les étapes suivantes de processus :
- détecter l'au moins une quantité physique à au moins un endroit de détection dans l'espace de travail (14) du dispositif de pipetage (10) après un nombre défini de processus de travail et/ou après l'expiration d'une période de temps définie.
